(19) Europäisches Patentamt

European Patent Office

Office européen des brevets

(11) Veröffentlichungsnummer: **0 371 153 B1**

(12) **EUROPÄISCHE PATENTSCHRIFT**

(45) Veröffentlichungstag der Patentschrift: **13.05.92**

(51) Int. Cl.⁵: **F16B 7/04**

(21) Anmeldenummer: **88119770.1**

(22) Anmeldetag: **28.11.88**

(54) **Verbindungselement.**

(43) Veröffentlichungstag der Anmeldung:
**06.06.90 Patentblatt 90/23**

(45) Bekanntmachung des Hinweises auf die
Patenterteilung:
**13.05.92 Patentblatt 92/20**

(84) Benannte Vertragsstaaten:
**AT BE CH DE ES FR GB GR IT LI LU NL SE**

(56) Entgegenhaltungen:
**EP-A- 0 000 525**
**EP-A- 0 059 463**
**EP-A- 0 160 196**

(73) Patentinhaber: **Exibelco GmbH**
**Dufourstrasse 11 Postfach 336**
**CH-4010 Basel(CH)**

(72) Erfinder: **Spaeth, Werner F.**
**Am Dornhau 1**
**W-7896 Wutöschingen-Horheim(DE)**

(74) Vertreter: **Schaafhausen, Ludwig Richard,**
**Dipl.-Phys.**
**KEIL & SCHAAFHAUSEN Patentanwälte Eys-**
**seneckstrasse 31**
**W-6000 Frankfurt am Main 1(DE)**

# Beschreibung

Die Erfindung betrifft ein Verbindungselement zum lösbaren Verbinden zweier Gestellbauteile, ein Stützenprofil und ein Zargenprofil, wobei das Verbindungselement in dem als Hohlprofil ausgebildeten Zargenprofil ortsfest angeordnet ist und in einem Gehäuse mindestens ein Halteelement aufweist, mit dem das Verbindungselement und damit auch das Zargenprofil lösbar mit dem Stützenprofil verbindbar ist, und wobei in dem Gehäuse ein Exzenter drehgelagert angeordnet ist der mindestens einen Exzenterkopf, eine Exzenterscheibe und einen Lagerzapfen aufweist, mittels dem das Halteelement längsbeweglich in dem Gehäuse geführt ist, wodurch ein aus der Stirnseite des Gehäuses herausragendes Bauteil des Halteelementes mit einer hinterschnittenen Längsnut des Stützenprofils in Eingriff bringbar ist, und wobei der Exzenterkopf des in das Gehäuse gegen die Kraft einer Feder eindrückbaren Exzenters in eine Bohrung des Zargenprofils einrastbar ist, sowie mit einer in Einschublage des Halteelementes die axiale Bewegbarkeit des Exzenters verhindernden Sicherung.

Derartige Verbindungselemente sind in vielfältigen Ausgestaltungen bekannt und werden insbesondere zur Verbindung von Stützenprofilen und Zargenprofilen verwendet, mit denen u.a. Messestände errichtet werden.Diese Verbindung soll einerseits äußerst fest, andererseits aber auch leicht herstellbar und wieder lösbar sein. Zum leichten Einsetzen und Ausbauen eines Verbindungselements in ein Zargenprofil ist der federbelastete Exzenter druckknopfartig in das Gehäuse des Verbindungselementes eindrückbar.

Damit dieses Eindrücken nicht versehentlich erfolgt, insbesondere nicht bei zusammengebauten Profilstangen, ist in der DE-C-31 53 232 vorgeschlagen worden, als Sicherung einen ortsfesten Anschlag im Inneren des Lagergehäuses vorzusehen, der bezüglich eines zur Anlage des Exzenters im Eindrücksinne dienenden Endstücks des Halteelementes derart angeordnet ist, daß der Anschlag in Ausschublage des Halteelementes sich zwar außerhalb des Endstückes befindet und daher dessen Quer-Verschwenkbarkeit zuläßt, aber in Einschublage des Halteelementes unter dem Endstück liegt und dessen Quer-Verschwenkbarkeit blockiert.

Eine solche Eindrückverhinderung hat den Nachteil, daß die Geometrie des Gehäuses die Anbringung des gehäusefesten Anschlages zulassen muß, wobei das Halteelement durch den Exzenter einerseits zwar soweit in das Gehäuse eingezogen werden muß, daß eine sichere Verbindung des Zargenprofils mit dem Stützenprofil gewährleistet ist, andererseits der Exzenter aber eindrückbar sein muß, wenn sich das Haltelement in Ausschublage befindet. Dies hat in der Praxis zur Folge, daß der gehäusefeste Anschlag so dimensioniert wird, daß er im wesentlichen nur in der Endphase des Festziehvorganges unter das Halteelement zu liegen kommt und damit dessen Quer-Verschwenkbarkeit blockiert.

Es hat sich jedoch als wünschenswert erwiesen, daß der Exzenter bereits in einem frühen Stadium des Verbindungsvorganges an einem unbeabsichtigten Eindrücken gehindert wird.

In der EP-B-0 160 196 ist daher bereits ein Verbindungselement vorgeschlagen worden, bei der die Exzenterscheibe fast während des gesamten Verbindungsvorganges in einem Schlitz im Gehäuse des Verbindungselementes geführt wird, so daß der Exzenter nicht in das Gehäuse eingedrückt werden kann. Auch bei einer derartigen Eindrückverhinderung müssen die geometrischen Verhältnisse des Verbindungselementes es zulassen, daß sich die Exzenterscheibe während des Verbindungsvorganges in dem Schlitz des Gehäuses befindet. Lediglich wenn sich das Halteelement in seiner Ausschublage befindet, soll es eingedrückt werden können. Wenn das Halteelement fest angezogen ist, braucht die Exzenterscheibe sich nicht mehr in dem Schlitz des Gehäuses zu befinden da bereits der Kraftschluß des Halteelementes dessen Eindrückbarkeit verhindert.

Aufgabe der vorliegenden Erfindung ist es daher, ein Verbindungselement der eingangs genannten Art zu schaffen, bei dem eine Sicherung vorgesehen ist, die in einem definierten Bereich des Verbindungsvorgangs ein unbeabsichtigtes Eindrücken des Exzenters verhindert, in einem ebenfalls vorherbestimmbaren Bereich, insbesondere in der Ausschublage des Halteelementes, eine axiale Beweglichkeit des Exzenters jedoch zuläßt.

Diese Aufgabe wird erfindungsgemäß im wesentlichen dadurch gelöst, daß die Sicherung aus einem am Exzenter, insbesondere am Lagerzapfen des Exzenters vorgesehenen Vorsprung und einer im Gehäuse ausgebildeten Ausnehmung besteht, wobei der Vorsprung und die Ausnehmung derart zueinander angeordnet sind, daß der Vorsprung zwar im Bereich der Ausschublage des Halteelementes in die Ausnehmung eindrückbar ist und somit eine axiale Bewegbarkeit des Exzenters zuläßt aber in Einschublage des Haltelementes nicht eindrückbar ist und der Exzenter dadurch an einer axialen Bewegbarkeit gehindert wird. Eine solche Eindrückverhinderung läßt sich mit geringem Aufwand ggfs. auch nachträglich an unterschiedlichsten Verbindungselementen anbringen. Der Bereich, in dem ein Eindrücken verhindert werden soll, kann dabei individuell festgelegt werden.

Der Vorsprung läßt sich erfindungsgemäß besonders einfach herstellen, wenn er einstückig mit dem Lagerzapfen ausgebildet ist.

Gemäß einer bevorzugten Ausgestaltung der Erfindung kann der Vorsprung ein am Lagerzapfen befestigter Bolzen oder Stift sein. Diese können auch noch nachträglich, Z.B. durch Schweißen, an dem Lagerzapfen angebracht werden.

Eine weitere Ausgestaltung der Erfindung sieht vor, daß der Vorsprung eine Abschrägung aufweist. Auf diese Weise ist der Vorsprung weit in die Aussparung eindrückbar.

Zur sicheren Führung des Lagerzapfens im Gehäuse ist die Führung erfindungsgemäß als Bohrung im Gehäuseboden ausgebildet, deren Randbereich kraterförmig in das Gehäuse ragt.

In Weiterbildung dieses Erfindungsgedankens ist der Vorsprung derart am Lagerzapfen angeordnet, daß er in einer die Eindrückbarkeit des Exzenters hindernden Lage den unteren Rand der kraterförmigen Bohrung berührt oder einen nur minimalen Abstand davon aufweist. Auf diese Weise wird erreicht, daß das Halteelement während des Festziehvorganges sicher geführt ist und insbesondere nicht von der Exzenterscheibe springen kann, was bei zweiteiligen Halteelementen der Fall sein kann.

In weiterer vorteilhafter Ausgestaltung der Erfindung ist die Ausnehmung derart ausgebildet, daß sie sich von der Bohrung ausgehend in den Gehäuseboden erstreckt. Dadurch kann der am Lagerzapfen ausgebildete Vorsprung in Ausschublage des Halteelementes problemlos in die Ausnehmung eingedrückt werden.

Zweckmäßigerweise ist die Ausnehmung so bemessen, daß sie etwas größer als der Vorsprung am Lagerzapfen ist.

In vorteilhafter Weiterbildung des Erfindungsgedankens hat es sich als zweckmäßig erwiesen, das Gehäuse aus Guß und den Gehäuseboden aus Stahlblech herzustellen. Auf diese Weise ist zum einen das Gehäuse einfach und kostengünstig herstellbar. Zum anderen läßt sich die kraterförmige Bohrung im Gehäuseboden leicht durch eine Stanzung anbringen.

Weitere Merkmale, Vorteile und Anwendungsmöglichkeiten der Erfindung ergeben sich aus der nachfolgenden Beschreibung eines Ausführungsbeispieles, das in der Zeichnung dargestellt ist. Dabei bilden alle beschriebenen und/oder bildlich dargestellten Merkmale für sich oder in beliebiger sinnvoller Kombination den Gegenstand der Erfindung, unabhängig von ihrer Zusammenfassung in den Ansprüchen oder deren Rückbeziehung.

Es zeigen:

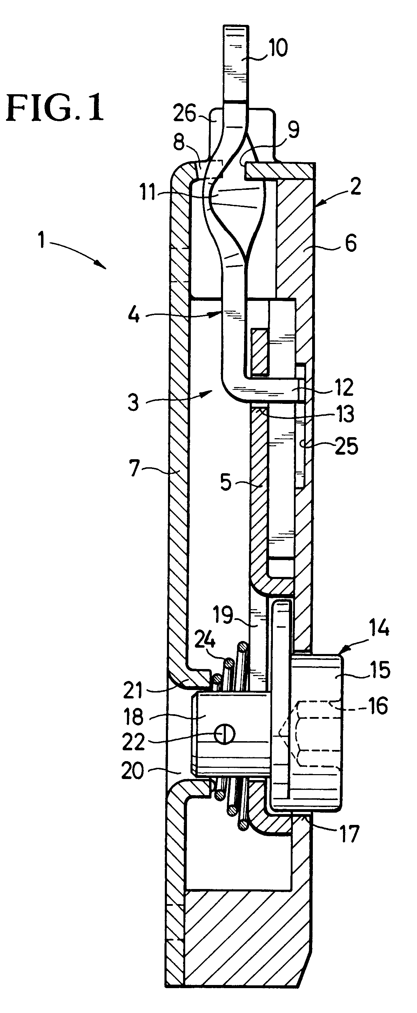

Fig. 1 in teilweise geschnittener Darstellung eine Seitenansicht eines erfindungsgemäßen Verbindungselementes und

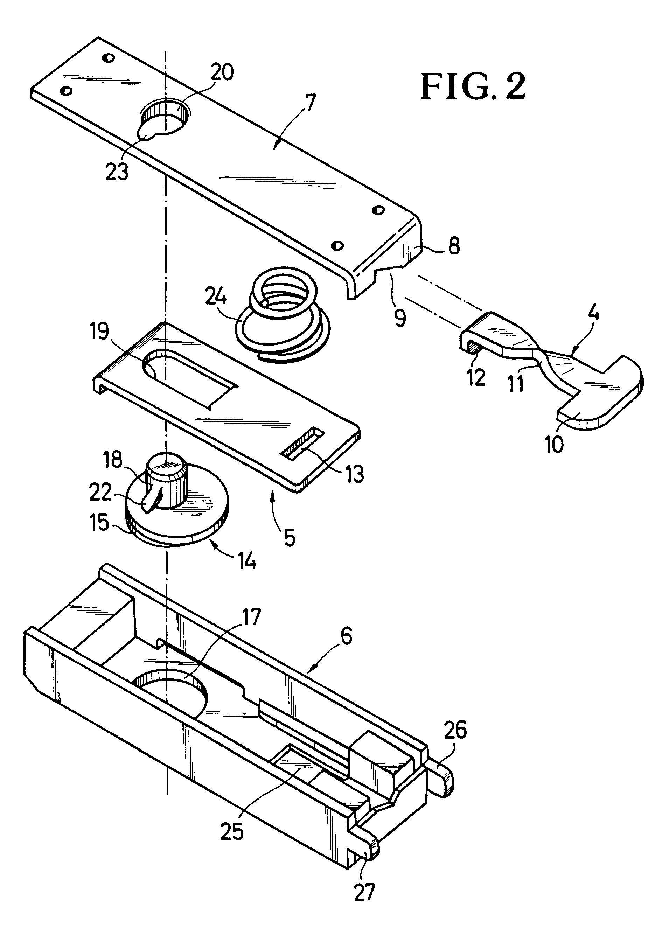

Fig. 2 eine Explosionsdarstellung des in Fig. 1 gezeigten Verbindungselementes.

Das Verbindungselement 1 weist ein Gehäuse 2 auf, in dem ein Halteelement 3 längsverschieblich angeordnet ist. Das Halteelement 3 besteht aus einem Feststellelement 4 und einem Zugelement 5. Das Gehäuse 2 ist zweiteilig angeführt und besteht aus einem Gehäusekörper 6 und einem Gehäuseboden 7. Der Gehäuseboden 7 ist an seinem vorderen Ende winklig ausgeführt, wobei das abgewinkelte Teil 8 die Stirnseite des Gehäuses bildet.

In dem abgewinkelten Teil 8 des Gehäusebodens 7 ist der obere Teil eines schräg verlaufenden Schlitzes 9 ausgebildet, während der untere Teil des schräg verlaufenden Schlitzes 9 an der Stirnseite des Gehäusekörpers 6 ausgebildet ist. Durch diesen Schlitz 9 reicht das Feststellelement 4, das an seinem vorderen Ende einen hammerförmigen Querriegel 10 aufweist, woran sich ein symmetrisch verdrillter Abschnitt 11 anschließt. Das andere Ende des Feststellelementes 4 wird durch einen Haken 12 gebildet, der in eine schlitzförmige Ausnehmung 13 in dem schiebefederartigen Zugelement 5 eingehängt wird.

Das Zugelement 5 wird durch einen Exzenter 14 in Längsrichtung des Gehäuses 2 bewegt. Der Exzenterkopf 15 des Exzenters 14 weist eine Werkzeugaufnahme 16 zur Betätigung des Exzenters 14 auf und ragt durch eine Öffnung 17 im Gehäusekörper 6. Der dem Exzenterkopf 15 gegenüberliegende Lagerzapfen 18 des Exzenters 14 ragt durch eine längliche Öffnung 19 in dem Zugelement 5 und durch eine Bohrung 20 im Gehäuseboden 7. Der Rand der Bohrung 20 ist nach innen umgebogen und bildet eine Führung 21 für den Lagerzapfen 18. Zwischen dem Zugelement 5 und dem Gehäuseboden 7 ist eine Druckfeder 24 angeordnet, durch die der Exzenterkopf 15 druckknopfartig in das Gehäuse eindrückbar ist. Am Lagerzapfen 18 ist ein Vorsprung 22 ausgebildet. Der Vorsprung 22 ist in dem Ausführungsbeispiel als einseitig abgeflachter Bolzen oder Stift ausgebildet, der an dem Lagerzapfen 18 angeschweißt ist. Der Vorsprung 22 kann aber auch einstückig mit dem Lagerzapfen ausgebildet sein und beliebige Form haben. Im Bereich des Vorsprungs 22 ist im Gehäuseboden 7 eine Ausnehmung 23 vorgesehen, die sich vorzugsweise von der Bohrung 20 ausgehend in den Gehäuseboden 7 erstreckt. Die Ausnehmung 23 ist derart in dem Gehäuseboden 7 angeordnet, daß der Vorsprung 22 in der Ausschublage des Halteelementes 3 in die Ausnehmung 23 eingreifen kann. Um auch bei Berücksichtigung von herstellungsbedingten Maßtoleranzen in der Ausschublage des Halteelementes 3 ein Eindrücken des Exzenters 14 zu gewährleisten, überstreicht die Ausnehmung 23 einen Winkelbereich, der etwas größer ist als dies die Abmaße des Vorsprungs 22 erfordern würden. Die Größe der Ausnehmung 23 bestimmt den Bereich, in dem der Exzenter 14 eindrückbar ist. Damit läßt sich dieser Bereich individuell, ggf. auch nachträglich, festlegen, unabhängig von der Geometrie des Verbindungselementes, dessen Gehäuses, des Halteelementes etc.

Zum Verbinden von (nicht dargestellten) Profilstangen, insbesondere von Zargen- und Stützenprofilen, wird zunächst das Verbindungselement 1 in ein Zargenprofil eingeschoben. Dazu muß der aus dem Gehäuse 2 des Verbindungselementes 1 herausragende Exzenterkopf 15 in das Gehäuse 2 eingedrückt werden. Dies soll jedoch nur in der Ausschubstellung des Halteelementes 3 möglich sein. In dieser Position liegt der Vorsprung 22 gegenüber der Ausnehmung 23, so daß der Bewegungsweg des Exzenters 14 nicht durch den Vorsprung 22 versperrt wird. Da der Vorsprung 22 in dieser Stellung durch die Ausnehmung 23 hindurchtreten kann, läßt sich der Exzenter 14 in das Gehäuse 2 eindrücken. Damit kann das Verbindungselement 1 in das Zargenprofil eingeschoben werden, bis die Druckfeder 24 den Exzenterkopf 15 wieder aus dem Gehäuse 2 in eine im Zargenprofil vorgesehene entsprechend dimensionierte, nicht dargestellte Bohrung drückt und ihn in diese Bohrung einschnappen läßt. Durch diesen Eingriff des Exzenterkopfes 15 in die Bohrung des Zargenprofils ist das Verbindungsschloß 1 im Innern des Zargenprofils gesichert und kann von selbst nicht herausfallen. Eine Demontage kann nur durch bewußte Druckausübung auf den Exzenterkopf 15 und gleichzeitiges Herausziehen des Verbindungselementes 1 erfolgen. Damit hat die Druckfeder 24 zugleich die Aufgabe, das Verbindungselement 1 in seiner Montagestellung im Zargenprofil zu sichern.

Um eine Profilstange mit Zargenprofil in der ausgewählten Position des Stützenprofils zu fixieren, braucht der Exzenterkopf 15 lediglich verdreht zu werden, wozu ein Werkzeug in die Werkzeugaufnahme 16 des Exzenterkopfes 15 eingeführt wird, die durch die Bohrung im Zargenprofil zugänglich ist. Bei einer Drehung des Exzenters 14 wird das Feststellelement 4 durch den Schlitz 9 in das Gehäuse 2 hereingezogen. Sobald der verdrillte Abschnitt 11 in den Bereich des Schlitzes 9 gelangt, wird das Feststellelement 4 gedreht. Die Drehung des hammerförmigen Querriegels 10 bei einer halben Hublänge beträgt etwa 30°. Damit der Haken 12 des Feststellelementes 4 nicht im Gehäuse 2 verkantet, ist im Gehäusekörper 6 eine Aussparung 25 vorgesehen.

Als Einführhilfe und als Schutz für den hammerkopfförmigen Querriegel 10 sind an dem Gehäusekörper 6 zwei nach vorn vorstehende Stege 26, 27 vorgesehen.

In der Kupplungsstellung sind die beiden Profilstangen fest miteinander verspannt. Eine axiale Bewegbarkeit des Exzenters 14 ist in dem vorbestimmten Bereich auch während des Befestigungsvorgangs nicht möglich, da der Vorsprung 22 am nach unten gebogenen Rand der Bohrung 20 anliegt. Damit ist sichergestellt, daß die Profilstangen nicht durch irrtümlichen Axialdruck auf den Exzenterkopf 15 wieder außer Eingriff kommen können.

Um das Stützen- und das Zargenprofil wieder voneinander zu lösen, braucht der Exzenter 14 nur in die Ausschubstellung des Halteelementes 3 zurückgedreht und der Querriegel 10 aus dem Stützenprofil gezogen zu werden.

Die vorliegende Erfindung läßt sich bei allen Verbindungselementen verwenden, mit denen Gestellbauteile wie Stützenprofile und Zargenprofile miteinander verbunden werden sollen. So läßt sich die erfindungsgemäße Eindrückverhinderung auch bei Verbindungselementen verwenden, wie sie beispielsweise in den EP-B-0 059 463, EP-A 0 070 362 und EP-A-0 178 369 beschrieben sind, um nur einige zu nennen.

Bezugszeichenliste:

| | |
|---|---|
| 1 | Verbindungselement |
| 2 | Gehäuse |
| 3 | Halteelement |
| 4 | Feststellelement |
| 5 | Zugelement |
| 6 | Gehäusekörper |
| 7 | Gehäuseboden |
| 8 | abgewinkeltes Teil von 7 |
| 9 | Schlitz |
| 10 | Querriegel |
| 11 | symmetrisch verdrillter Abschnitt |
| 12 | Haken |
| 13 | schlitzförmige Ausnehmung |
| 14 | Exzenter |
| 15 | Exzenterkopf |
| 16 | Werkzeugaufnahme |
| 17 | Öffnung |
| 18 | Lagerzapfen |
| 19 | Öffnung |
| 20 | Bohrung |
| 21 | Führung |
| 22 | Vorsprung |
| 23 | Ausnehmung |
| 24 | Druckfeder |
| 25 | Aussparung |
| 26 | Steg |
| 27 | Steg |

**Patentansprüche**

1.   Verbindungselement (1) zum lösbaren Verbinden zweier Gestellbauteile, ein Stützenprofil und ein Zargenprofil, wobei das Verbindungselement (1) in dem als Hohlprofil ausgebildeten Zargenprofil ortsfest angeordnet ist und in einem Gehäuse (2) mindestens ein Halteelement (3) aufweist, mit dem das Verbindungselement (1) und damit auch das Zargenprofil lösbar mit dem Stützenprofil verbindbar ist, und wobei in dem Gehäuse (2) ein Exzenter (14) drehgelagert angeordnet ist, der mindestens einen Exzenterkopf (15), eine Exzenterscheibe und einen Lagerzapfen (18) aufweist, mittels dem das Halteelement (3) längsbeweglich in dem Gehäuse (2) geführt ist, wodurch ein aus der Stirnseite des Gehäuses (2) herausragendes Bauteil des Halteelementes (3) mit einer hinterschnittenen Längsnut des Stützenprofils in Eingriff bringbar ist, und wobei der Exzenterkopf (15) des in das Gehäuse (2) gegen die Kraft einer Feder (24) eindrückbaren Exzenters (14) in eine Bohrung des Zargenprofils einrastbar ist, sowie mit einer in Einschublage des Halteelementes (3) die axiale Bewegbarkeit des Exzenters (14) verhindernden Sicherung, dadurch gekennzeichnet, daß die Sicherung aus einem am Exzenter (14), insbesondere am Lagerzapfen (18) des Exzenters (14) vorgesehenen Vorsprung (22) und einer im Gehäuse (2) ausgebildeten Ausnehmung (23) besteht, wobei der Vorsprung (22) und die Ausnehmung (23) derart zueinander angeordnet sind, daß der Vorsprung (22) zwar im Bereich der Ausschublage des Halteelementes (3) in die Ausnehmung (23) eindrückbar ist und somit eine axiale Bewegbarkeit des Exzenters (14) zuläßt, aber in Einschublage des Halteelementes (3) nicht eindrückbar ist und der Exzenter (14) dadurch an einer axialen Bewegbarkeit gehindert wird.

2. Verbindungselement nach Anspruch 1, dadurch gekennzeichnet, daß der Lagerzapfen (18) und der Vorsprung (22) einstückig ausgebildet sind.

3. Verbindungselement nach Anspruch 2, dadurch gekennzeichnet, daß der Vorsprung (22) ein am Lagerzapfen (18) befestigter Bolzen oder Stift ist.

4. Verbindungselement nach Anspruch 2 oder 3, dadurch gekennzeichnet, daß der Vorsprung (22) eine Abschrägung aufweist.

5. Verbindungselement nach Anspruch 1, dadurch gekennzeichnet, daß die Ausnehmung (23) an die Führung (21) des Lagerzapfens (18) des Exzenters (14) angrenzt.

6. Verbindungselement nach Anspruch 5, dadurch gekennzeichnet, daß die Führung (21) des Lagerzapfens (18) als Bohrung (20) im Gehäuseboden (7) ausgebildet ist, deren Randbereich kraterför mig in das Gehäuse (2) ragt.

7. Verbindungselement nach Anspruch 6, dadurch gekennzeichnet, daß der Vorsprung (22) am Lagerzapfen (18) derart angeordnet ist, daß er in einer die Eindrückbarkeit des Exzenters (14) hindernden Lage den unteren Rand der kraterförmigen Bohrung (20) berührt oder einen nur minimalen Abstand davon aufweist.

8. Verbindungselement nach einem der Ansprüche 6 oder 7, dadurch gekennzeichnet, daß sich die Ausnehmung (23) von der Bohrung (20) ausgehend in den Gehäuseboden (7) erstreckt.

9. Verbindungselement nach einem der vorhergehenden Ansprüche, dadurch gekennzeichnet, daß die Ausnehmung (23) so bemessen ist, daß sie etwas größer als der Vorsprung (22) am Lagerzapfen (18) ist.

10. Verbindungselement nach einem der vorhergehenden Ansprüche, dadurch gekennzeichnet, daß die Ausnehmung (23) einen größeren Winkelabschnitt als dies den Abmessungen des Vorsprungs (22) entspricht, erfaßt.

11. Verbindungselement nach einem der vorhergehenden Ansprüche, dadurch gekennzeichnet, daß der Gehäusekörper (6) aus Guß und der Gehäuseboden (7) aus Stahlblech bestehen.

**Claims**

1. Connecting element (1) for releasably connecting two framework components, a supporting section and a frame section, the connecting element (1) being fixedly arranged in the frame section, which is in the form of a hollow section member, and having in a housing (2) at least one retaining element (3) with which the connecting element (1) and thus also the frame section can be releasably connected to the supporting section, and an eccentric member (14) being rotatably mounted in the housing (2), which eccentric member has at least one eccentric head (15), an eccentric disc and a bearing post (18) by means of which eccentric member the retaining element (3) is guided longitudinally in the housing (2), whereby a component of the retaining element (3) projecting from the end face of the housing (2) is arranged to be brought into engagement with an undercut longitudinal groove of the supporting profile, and the eccentric head (15) of the eccentric member (14), arranged to be pressed into the housing (2) against the force of a spring (24), being arranged to lock into a bore of the frame section, and also with a securing means preventing the eccentric member (14) from moving axially in the inserted state of the retaining element (3), characterized in that the securing means consists of a projection (22) provided on the eccentric member (14), in particular on the bearing post (18) of the eccentric member (14), and of a recess (23) formed in the housing (2), the projection (22) and the recess (23) being arranged relative to one another so that although the projection (22) can be pressed in and near the ejected state of the retaining element (3) into the recess (23), thus allowing the eccentric member (14) to move axially, in the inserted state of the retaining element (3) it cannot be pressed in, and the eccentric member (14) is thus prevented from moving axially.

2. A connecting element according to claim 1, characterized in that the bearing post (18) and the projection (22) are of unitary construction.

3. A connecting element according to claim 2, characterized in that the projection (22) is a bolt or pin secured to the bearing post (18).

4. A connecting element according to claim 2 or 3, characterized in that the projection (22) is bevelled.

5. A connecting element according to claim 1, characterized in that the recess (23) adjoins the guide means (21) for the bearing post (18) of the eccentric member (14).

6. A connecting element according to claim 5, characterized in that the guide means (21) for the bearing post (18) is in the form of a bore (20) in the housing base (7), the edge region of which bore projects crater-like into the housing (2).

7. A connecting element according to claim 6, characterized in that the projection (22) is arranged on the bearing post (18) so that, in a position preventing the eccentric member (14) from being pressed in, it touches the lower edge of the crater-like bore (20) or is only minimally spaced therefrom.

8. A connecting element according to one of claims 6 or 7, characterized in that, starting from the bore (20), the recess (23) extends into the housing base (7).

9. A connecting element according to one of the preceding claims, characterized in that the recess (23) is dimensioned so that it is somewhat larger than the projection (22) on the bearing post (18).

10. A connecting element according to one of the preceding claims, characterized in that the recess (23) encloses a larger angular portion than that corresponding to the dimensions of the projection (22).

11. A connecting element according to one of the preceding claims, characterized in that the housing body (6) consists of cast iron and the housing base (7) consists of sheet steel.

**Revendications**

1. Elément d'assemblage (1) pour réunir de manière à pouvoir les séparer deux composants d'un bâti, un profilé servant de montant et un profilé servant de châssis, ledit élément d'assemblage (1) étant disposé de manière fixe à l'intérieur du profilé servant de châssis, réalisé en forme de profilé creux, et présentant, à l'intérieur d'un boîtier (2) au moins un élément de maintien (3) à l'aide duquel l'élément d'assemblage (1), et donc également le profilé servant de châssis, peuvent être assemblés, de manière à pouvoir être séparé, au profilé servant de montant, tandis qu'un excentrique (14) est monté de manière rotative dans le boitier (2), cet excentrique présentant au moins une tête d'excentrique (15), un disque d'excentrique et un coussinet (18) au moyen duquel l'élément de maintien (3) est guidé longitudinalement à l'intérieur du boîtier (2) ce qui a pour effet d'amener un composant de l'élément de maintien (3) faisant saillie du côté frontal du boîtier (2) en prise avec une rainure longitudinale pratiquée dans le profilé servant de montant, et tandis que la tête (15) de l'excentrique (14), pouvant être enfoncée en s'opposant à la force d'un ressort (24) dans le boîtier (2), peut être encastrée dans un perçage pratiqué dans le profilé servant de châssis, une sécurité est également pévue qui empêche la mobilité axiale de l'excentrique (14) dans la position d'insertion de l'élément de maintien (3), caractérisé par le fait que cette sécurité est constituée d'une projection (22) prévue sur l'excentrique (14) plus particulièrement sur le coussinet (18) de cet excentrique (14), et d'une encoche (23) pratiquée dans le boîtier (2), ladite projection (22) et l'encoche (23) étant disposées de telle sorte l'une par rapport à l'autre que la projection (22), bien qu'elle puisse être enfoncée dans l'encoche (23) au voisinage de la situation d'introduction de l'élément de maintien (3) et permette donc la mobilité axiale de l'excentrique (14), ne puisse plus être enfoncée lorsque l'élément de maintien (3) est en position d'introduction et que de ce fait toute mobilité axiale de l'excentrique (14) est alors empêchée.

2. Elément d'assemblage selon la revendication 1, caractérisé par le fait que le coussinet (18) et la projection (22) sont réalisés en une seule pièce.

3. Elément d'assemblage selon la revendication 2, caractérisé par le fait que la projection (22) est une tige ou un goujon fixé sur le coussinet (18).

4. Elément d'assemblage selon les revendications 2 ou 3, caractérisé par le fait que la projection (22) présente un chanfrein.

5. Elément d'assemblage selon la revendication 1, caractérisé par le fait que l'encoche (23) est adjacente au guidage (21) du coussinet (18) de l'excentrique (14).

6. Elément d'assemblage selon la revendication 5, caractérisé par le fait que le guidage (21) du coussinet (18) est réalisé sous la forme d'un perçage (20) pratiqué dans le fond (7) du boîtier dont la zone marginale pénètre dans le boîtier (2) en formant un cratère.

7. Elément d'assemblage selon la revendication 6, caractérisé par le fait que la projection (22) est disposée sur le coussinet (18) de telle sorte que, dans une position empêchant l'excentrique (14) d'être enfoncé, elle touche le bord inférieur du perçage (20) en forme de cratère ou n'est placée qu'à une distance minimale de ce bord.

8. Elément d'assemblage selon l'une des revendications 6 ou 7, caractérisé par le fait que l'encoche (23) s'étend entre le perçage (20) vers l'intérieur du fond (7) du boîtier.

9. Elément d'assemblage selon l'une des revendications précédentes, caractérisé par le fait que l'évidement (23) présente des dimensions telles à le rendre légèrement plus grand que la projection (22) présente sur le coussinet (18).

10. Elément d'assemblage selon l'une des revendications précédentes, caractérisé par le fait que l'encoche (23) présente une section angulaire supérieure à celle correspondant aux dimensions de la projection (22).

11. Elément d'assemblage selon l'une des revendications précédentes, caractérisé par le fait que le corps (6) et le fond (7) du boîtier sont constitués en tôle d'acier.

FIG.1

FIG. 2